# EUROPÄISCHE PATENTSCHRIFT

(11) **EP 1 572 439 B1**
(45) Veröffentlichungstag und Bekanntmachung des Hinweises auf die Patenterteilung: **12.07.2006**
(21) Anmeldenummer: 03812579.5
(22) Anmeldetag: 24.10.2003
(51) Int. Cl.: B29C 70/50, B29C 47/02, B29D 30/38

(54) **KALANDERANLAGE ZUR HERSTELLUNG VON STAHLSEILKARKASSENBAHNEN**
CALENDERING SYSTEM FOR THE PRODUCTION OF WEBS OF STEEL CABLE CARCASS
INSTALLATION DE CALANDRAGE POUR PRODUIRE DES BANDES DE CARCASSE A CABLES EN ACIER

(30) Priorität: 12.12.2002 DE 10258353
(43) Veröffentlichungstag der Anmeldung: 14.09.2005
(73) Patentinhaber: Berstorff GmbH, 30625 Hannover (DE)
(72) Erfinder: CAPELLE, Gerd, 30855 Langenhagen (DE); REISSWIG, Georg, 31249 Hohenhameln (DE)
(74) Vertreter: Harrasz, Julia Konstanze
(86) Internationale Anmeldenummer: PCT/EP2003/011771
(87) Internationale Veröffentlichungsnummer: WO 2004/052630

(56) Entgegenhaltungen:
- EP-A- 0 467 560
- GB-A- 1 144 863
- US-A- 3 694 120
- US-A- 3 930 922
- PATENT ABSTRACTS OF JAPAN vol. 1999, no. 03, 31. März 1999 (1999-03-31) -& JP 10 329234 A (SUMITOMO RUBBER IND LTD), 15. Dezember 1998 (1998-12-15)

## Beschreibung

Die Erfindung betrifft eine Kalanderanlage zur Herstellung von Stahlseilkarkassenbahnen für Reifen.

Herkömmlicherweise werden Stahlseilkarkassen für Reifen in einem Kalander mit zwei Extruderschnecken hergestellt, die zwei übereinander angeordneten Walzenpaaren jeweils eine plastifizierte Kautschukmasse zuführen. Von einem Spulenträger abgerollte Stahlseile werden über Führungen zwischen die von den Walzenpaaren ausgegebenen Kautschukbahnen gelegt und anschließend mit den Kautschukbahnen in einem horizontalen Arbeitsspalt zu der Stahlseilkarkasse verarbeitet. Eine solche Einrichtung ist aus der Druckschrift JP 10329234-A bekannt.

Bei derartigen Kalanderanlagen können Karkassendicken bis 2 mm hergestellt werden. Der von den Extrudern zugeführte Materialstrang bildet vor dem zwischen den Walzen gebildeten Plattenziehspalt einen Rollwulst, der bei der Herstellung größerer Karkassendicken zu einer Rissbildung neigt, wodurch Luft in die Karkassenbahn eindringen kann. Durch derartige Lufteinschlüsse wird die Qualität des Produktes deutlich herabgesenkt.

Kalanderanlagen, die eine Kombination eines üblichen Extruders mit einem Kalander aufweisen (die sogenannten "Extruder-Kalander-Kombination" oder "Double-Roller-Head-Anlage"), sind in der Gummiextrusionstechnik bekannt: vgl. zum Beispiel die Druckschrift US 3694120 - A.

Der Erfindung liegt die Aufgabe zugrunde, gegenüber den bekannten Kalanderanlagen Verbesserung zu schaffen und insbesondere die Herstellung von dicken Stahlseilkarkassen mit hoher Qualität zu ermöglichen.

Diese Aufgabe wird durch eine Kalanderanlage nach Anspruch 1 gelöst. Die Unteransprüche beschreiben bevorzugte Weiterbildungen.

Erfindungsgemäß sind somit zwei Roller-Head-Anlagen aus jeweils einem Extruder, einer Breitschlitzdüse und einem Zwei-Walzen-Kalander vorgesehen, die jeweils eine Materialbahn, insbesondere eine Kautschukbahn, erzeugen. Die Stahlseile werden direkt mit den von den beiden Walzenpaaren ausgegebenen Kautschukbahnen in einen Arbeitsspalt zwischen den Arbeitswalzen der beiden Walzenpaare eingegeben und zu der Karkassenbahn verarbeitet. Durch die in die Plattenziehspalte zwischen Arbeitswalzen und Plattenziehwalzen hineinragenden Breitschlitzdüsen erfolgt hierbei eine Vorkaübrierung des Materialknets, d.h. insbesondere Kautschuks, so dass Materialbahnen großer Dicke und hoher Qualität hergestellt werden können.

Hierbei können relativ kleine Plattenziehwalzen verwendet werden, die weitere Vorteile bieten. Sie sind in der Herstellung kostengünstig und benötigen weiterhin aufgrund der geringeren Lagerbelastung lediglich kleinere und somit kostengünstigere Lager bei geringem Lagerverschleiß. Da aufgrund der größeren Krümmung der kleinen Plattenziehwalzen die Plattenziehspalte in Förderrichtung kleiner bzw. kürzer sind, ist eine geringere Energiezufuhr erforderlich, so dass die Herstellungskosten und der Verschleiß gesenkt werden können.

Die Drahtseile werden anschließend in den Arbeitsspalt zwischen den Kautschukbahnen eingegeben. Erfindungsgemäß ist der Arbeitsspalt vertikal ausgerichtet bei horizontal nebeneinander angeordneten Walzenpaaren, so dass - anders als bei den eingangs beschriebenen Kalandern - beide Walzenpaare direkt von den Extrudern über die Breitschlitzdüsen mit dem plastifizierten Material beschickt werden können. Beide Extruder können hierbei ebenerdig aufgestellt und somit relativ einfach beschickt werden. Die Breitschlitzdüsen sind vorteilhafterweise mit einem relativ geringen Winkel von z. B. 0° bis 40° gegenüber der Horizontalen ausgerichtet und können die von den Extruderschnecken ausgegebenen Materialknete ohne große Widerstandsverluste aufnehmen; insbesondere die horizontale Ausrichtung der Breitschlitzdüsen ist hierbei aufgrund des geringen Widerstandes vorteilhaft. Die Plattenziehwalzen sind vorteilhafterweise an den Arbeitswalzen jeweils unter einem Winkel von 50° bis 90° gegenüber der Horizontalen angeordnet. Ggf. werden die Stahlseile durch eine Umlenkrolle bzw. Führungsrolle kurz vor dem Arbeitsspalt zur definierten Auflage auf eine der beiden Arbeitswalzen gelegt.

Erfindungsgemäß können somit Stahlseilkarkassen mit Dicken von 0 bis 30 mm, vorzugsweise von 0,5 bis 10 mm ohne bzw. praktisch ohne Lufteinschlüsse erzeugt werden. Der aus vier Walzen bestehende Kalander kann vorteilhafterweise in einem einzigen Kalanderchassis untergebracht werden.

Die Erfindung wird im Folgenden anhand der beiliegenden Zeichnungen an einigen Ausführungsformen näher erläutert. Es zeigen:
- Fig. 1: eine Schnittansicht einer Kalanderanlage gemäß einer Ausführungsform der Erfindung;
- Fig. 2: einen Ausschnitt aus Fig. 1;
- Fig. 3: einen der Fig. 2 entsprechenden Ausschnitt gemäß einer weiteren Ausführungsform der Erfindung.

Eine Kalanderanlage 1 weist zwei Extruder 2, 3, eine Stahlseilzuführeinrichtung 4 und einen Kalander 5 auf, aus dem eine Stahlseilkarkassenbahn 6 ausgegeben wird.

Die Extruder 2, 3 weisen jeweils einen Trichter 8, 9 zur Aufnahme des zu verarbeitenden Materialgutes und eine Extruderschnecke 10, 11 auf, die Extrusionsmaterial 14 bzw. 15 entlang ihrer horizontal verlaufenden Achsen an eine erste Breitschlitzdüse 16 bzw. eine zweite Breitschlitzdüse 17 ausgeben.

Der Kalander 5 weist ein erstes Walzenpaar mit einer ersten Arbeitswalze 18 und einer ersten Plattenziehwalze 20 auf, wobei die beiden Walzen 18, 20 sich gegensinnig drehen und durch einen ersten Plattenziehspalt 30 mit eine Dicke von z. B. 0 bis 15 mm getrennt sind. Entsprechend weist ein zweites Walzenpaar eine zweite Arbeitswalze 19 und eine sich gegensinnig zu dieser drehenden zweite Plattenziehwalze 21 auf, wobei zwischen den Walzen 19, 21 ein dem ersten Plattenziehspalt 30 entsprechender zweiter Plattenziehspalt 31 ausgebildet ist. Das plastische Material 14 bzw. 15 wird über die jeweilige Breitschlitzdüse 16, 17 über die Breite des Plattenziehspaltes 30, 31 verteilt zwischen die beiden Walzen jedes Walzenpaares 18, 20 bzw. 19, 21 eingegeben und zu einer ersten bzw. zweiten Kautschukbahn 26, 27 kalandriert. Erfindungsgemäß ist der aus den vier Walzen 18, 19, 20, 21 gebildete Kalander 5 in einem einzigen Kalanderchassis 34 aufgenommen.

Die stahlseilzuführende Einrichtung 4 weist in an sich bekannter Weise einen Spulenträger 22 mit Stahlseilspulen auf, von denen Stahlseile 23 abgewickelt und über Drahtseilführungen 24 und eine Umlenkrolle 25 dem Kalander 5 zugeführt werden. Die Stahlseile 23 werden direkt in einen Arbeitsspalt 32 zwischen den Arbeitswalzen 18, 19 oder über eine weitere Umlenkrolle z. B. auf die erste Kautschukbahn 26 kurz vor den Arbeitsspalt 32 gelegt. Der Arbeitsspalt 32 ist hierbei als Vertikalspalt ausgebildet, so dass die Stahlseile 23 vertikal zwischen die Kautschukbahnen 26, 27 gelegt werden können. Die Kautschukbahnen 26, 27 und Stahlseile 23 werden in dem Arbeitsspalt 32 zwischen den Arbeitswalzen 18, 19 zu der Stahlseilkarkassenbahn 6 kalandriert.

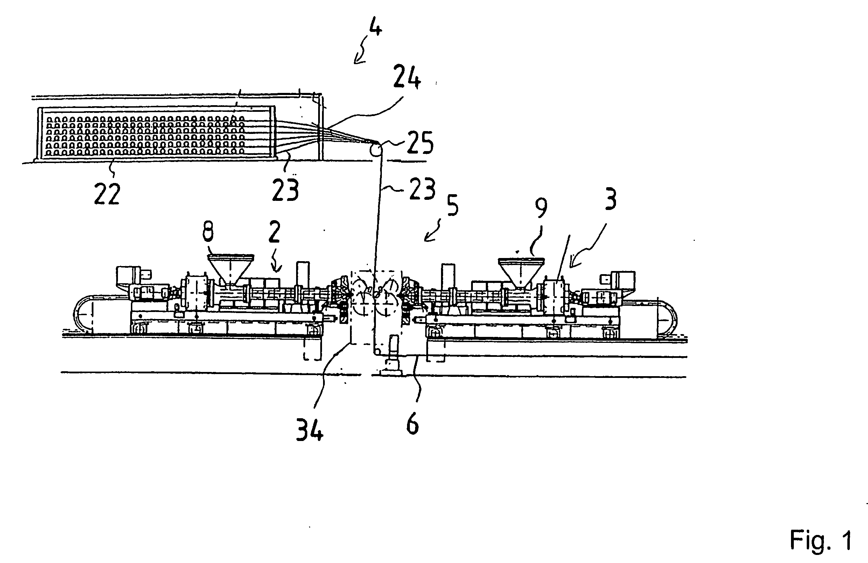

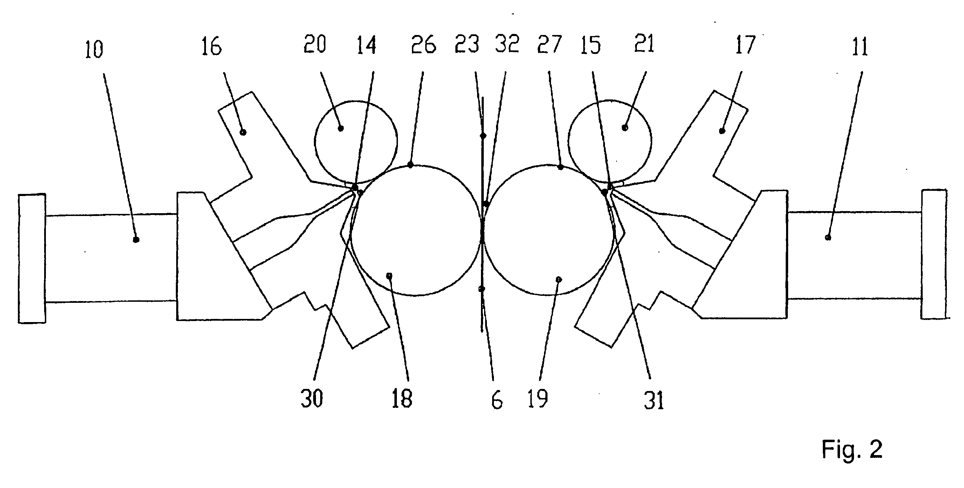

Bei der ersten Ausführungsform der Figuren 1 und 2 sind die Breitschlitzdüsen 16, 17 unter einem stumpfen Winkel gegenüber der horizontalen Förderrichtung der Extruderschnecken 10, 11 abgewinkelt. Der Umlenkwinkel der Kautschukbahnen 26, 27 auf den Arbeitswalzen 18, 19 von den Plattenziehspalten zu dem Arbeitsspalt liegt hierbei zwischen 120 und 130°.

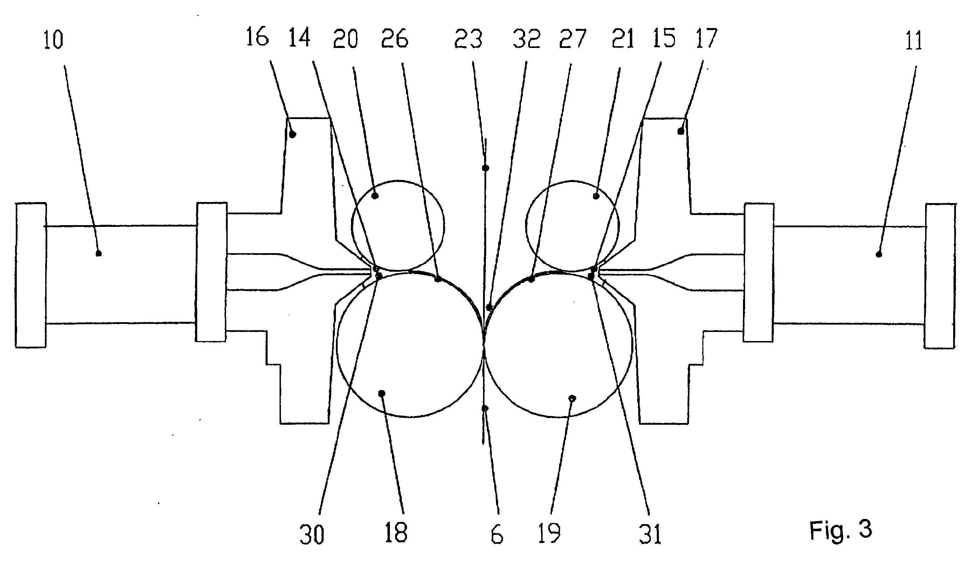

Bei der in Fig. 3 gezeigten vorteilhaften Ausführungsform erfolgt eine horizontale Zuführung des Extrusionsmaterials 14 bzw. 15 über die Extruderschnecken 10, 11 und die horizontal ausgerichteten Breitschlitzdüsen 16, 17 in die Plattenziehspalte 30, 31, so dass der Förderwiderstand gegenüber der ersten Ausführungsform verringert ist. Die Anordnung der Plattenziehwalzen 20, 21 über den Arbeitswalzen erfolgt bei dieser Ausführungsform entsprechend unter einem größeren Winkel gegenüber der Horizontalen als in der ersten Ausführungsform.

## Patentansprüche

1. Kalanderanlage, insbesondere zur Herstellung von Stahlseilkarkassenbahnen (6), die aufweist,
zwei Extruder (2, 3) zum Zuführen von plastifiziertem Material (14, 15),
eine Stahlseilzuführeinrichtung (4) zum Zuführen von Stahlseilen (23),
einen Kalander (5), der ein erstes gegensinnig drehendes Walzenpaar mit einer ersten Arbeitswalze (18) und einer ersten Plattenziehwalze (20) und ein zweites gegensinnig drehendes Walzenpaar mit einer zweiten Arbeitswalze (19) und einer zweiten Plattenziehwalze (21) aufweist,
eine zwischen dem ersten Extruder (2) und dem ersten Walzenpaar (18, 20) vorgesehene und in einen ersten Plattenziehspalt (30) zwischen dem ersten Walzenpaar (18, 20) ragende erste Breitschlitzdüse (16) und eine zwischen dem zweitem Extruder (3) und dem zweiten Walzenpaar (19, 21) vorgesehene und in einen zweiten Plattenziehspalt (31) zwischen dem zweiten Walzenpaar (19, 21) ragende zweite Breitschlitzdüse (17),
wobei zwischen den Arbeitswalzen (18, 19) ein Arbeitsspalt (32) ausgebildet ist zur Aufnahme einer von dem ersten Walzenpaar (18, 20) ausgegebenen ersten kalandrierten Bahn (27), einer von dem zweiten Walzenpaar (19, 21) ausgegebenen zweiten kalandrierten Bahn (27) und den von der Stahlseilzuführeinrichtung (4) ausgegebenen Stahlseilen (23), und zur Ausgabe der Stahlseilkarkassenbahn (6),
wobei der Arbeitsspalt (32) vertikal verläuft.

2. Kalanderanlage nach Anspruch 1 oder 2, **dadurch gekennzeichnet, dass** die beiden Extruder (2,3) im wesentlichen auf einer Höhe und die beiden Walzenpaare im wesentlichen horizontal nebeneinander angeordnet sind.

3. Kalanderanlage nach einem der vorherigen Ansprüche, **dadurch gekennzeichnet, dass** der Kalander (5) in einem einzigen Kalanderchassis (34) integriert ist.

4. Kalanderanlage nach einem der vorherigen Ansprüche, **dadurch gekennzeichnet, dass** die Plattenziehwalzen (30, 31) an den Arbeitswalzen (18, 19) jeweils unter einem Winkel von 50° bis 90° gegenüber der Horizontalen angeordnet sind.

5. Kalanderanlage nach einem der vorherigen Ansprüche, **dadurch gekennzeichnet, dass** die Plattenziehwalzen (20, 21) kleiner als die Arbeitswalzen (18, 19) sind.

6. Kalanderanlage nach einem der vorherigen Ansprüche, **dadurch gekennzeichnet, dass** die hergestellte Stahlseilkarkassenbahn (6) eine Bahndicke von 0,5 bis 30 mm, vorzugsweise 0,5 bis 10 mm aufweist.

7. Kalanderanlage nach einem der vorherigen Ansprüche, **dadurch gekennzeichnet, dass** durch die Breitschlitzdüsen (16, 17) eine vorkalibrierte plastische Masse (14, 15) über die gesamte Breite der Plattenziehspalte (30, 31) verteilbar ist.

8. Kalanderanlage nach einem der vorherigen Ansprüche, **dadurch gekennzeichnet, dass** die Achsen der Extruder (2, 3) und der Breitschlitzdüsen (16, 17) horizontal verlaufen.

9. Kalanderanlage nach einem der Ansprüche 1 bis 8, **dadurch gekennzeichnet, dass** die Breitschlitzdüsen (16, 17) gegenüber den Achsen der Extruder (2, 3) abgewinkelt angeordnet sind.

## Claims

1. Calendering system, in particular for producing steel cable carcass webs (6), which has two extruders (2, 3) for feeding plasticised material (14, 15), a steel cable feeding device (4) for feeding steel cables (23), a calender (5), which has a first pair of rollers rotating in opposite directions, with a first working roller (18) and a first sheeting roller (20) and a second pair of rollers rotating in opposite directions with a second working roller (19) and a second sheeting roller (21), a first sheet die (16) provided between the first extruder (2) and the first roller pair (18, 20) and projecting into a first sheeting gap (30) between the first roller pair (18, 20) and a second sheet die (17) provided between the second extruder (3) and the second roller pair (19, 21) and projecting into a second sheeting gap (31) between the second roller pair (19, 21), wherein a working gap (32) is formed between the working rollers (18, 19) for receiving a first calendered web (27) delivered by the first roller pair (18, 20), a second calendered web (27) delivered by the second roller pair (19, 21) and the steel cables (23) delivered by the steel cable feeding device (4), and to deliver the steel cable carcass web (6), wherein the working gap (32) runs vertically.

2. Calendering system according to claim 1 or 2[sic], **characterised in that** the two extruders (2, 3) are arranged substantially at one level and the two roller pairs are arranged substantially horizontally next to one another.

3. Calendering system according to any one of the preceding claims, **characterised in that** the calender (5) is integrated in a single calender chassis (34).

4. Calendering system according to any one of the preceding claims, **characterised in that** the sheeting rollers (30, 31) are arranged on the working rollers (18, 19), in each case at an angle of 50° to 90° with respect to the horizontal line.

5. Calendering system according to any one of the preceding claims, **characterised in that** the sheeting rollers (20, 21) are smaller than the working rollers (18, 19).

6. Calendering system according to any one of the preceding claims, **characterised in that** the steel cable carcass web (6) produced has a web thickness of 0.5 to 30 mm, preferably 0.5 to 10 mm.

7. Calendering system according to any one of the preceding claims, **characterised in that** owing to the sheet dies (16, 17), a precalibrated plastic mass (14, 15) can be distributed over the entire width of the sheeting gap (30, 31).

8. Calendering system according to any one of the preceding claims, **characterised in that** the axes of the extruders (2, 3) and of the sheet dies (16, 17) run horizontally.

9. Calendering system according to any one of claims 1 to 8, **characterised in that** the sheet dies (16, 17) are arranged at an angle with respect to the axes of the extruders (2, 3).

## Revendications

1. Système de calandre, notamment pour la fabrication de bandes de carcasse de câble en acier (6), qui comprend deux extrudeuses (2, 3) destinées à amener le matériau plastifié (14, 15),
un système d'amenée de câble en acier (4) destiné à amener les câbles en acier (23),
une calandre (5), qui comprend une première paire de cylindres tournant à contresens, dotée d'un premier cylindre de travail (18) et d'un premier cylindre d'emboutissage (20) et une seconde paire de cylindres tournant à contresens, dotée d'un second cylindre de travail (19) et d'un second cylindre de laminage à plaques (21),
une première filière plate (16) prévue entre la première extrudeuse (2) et la première paire de cylindres (18, 20) et dépassant dans une première fente de laminage à plaques (30) entre la première paire de cylindres (18, 20) et une seconde filière plate (17) prévue entre la seconde extrudeuse (3) et la seconde paire de cylindres (19, 21) et dépassant dans une seconde fente de laminage à plaques (31) entre la seconde paire de cylindres (19, 21), une fente de travail (32) étant formée entre les cylindres de travail (18, 19) pour réceptionner une première bande calandrée (27) délivrée par la première paire de cylindres (18, 20), une seconde bande calandrée (27) délivrée par la seconde paire de cylindres (19, 21) et les câbles en acier (23) délivrés par le système d'amenée de câble en acier (4), et pour délivrer la bande de carcasse de câble en acier (6), la fente de travail (32) s'étendant verticalement.

2. Système de calandre selon la revendication 1 ou 2, **caractérisé en ce que** les deux extrudeuses (2, 3) sont disposées sensiblement à une certaine hauteur et les deux paires de cylindres sont disposées sensiblement horizontalement les unes à côté des autres.

3. Système de calandre selon l'une quelconque des revendications précédentes, **caractérisé en ce que** la calandre (5) est intégrée dans un seul châssis de calandre (34).

4. Système de calandre selon l'une quelconque des revendications précédentes, **caractérisé en ce que** les cylindres de laminage à plaques (30, 31) sont disposés sur les cylindres de travail (18, 19) respectivement selon un angle de 50° à 90° par rapport à l'horizontale.

5. Système de calandre selon l'une quelconque des revendications précédentes, **caractérisé en ce que** les cylindres de laminage à plaques (20, 21) sont plus petits que les cylindres de travail (18, 19).

6. Système de calandre selon l'une quelconque des revendications précédentes, **caractérisé en ce que** la bande de carcasse de câble en acier (6) fabriquée présente une épaisseur de bande de 0,5 à 30 mm, de préférence de 0,5 à 10 mm.

7. Système de calandre selon l'une quelconque des revendications précédentes, **caractérisé en ce que**, grâce aux filières plates (16, 17), une masse plastique préalablement calibrée (14, 15) peut être répartie sur toute la largeur des fentes de laminage à plaques (30, 31).

8. Système de calandre selon l'une quelconque des revendications précédentes, **caractérisé en ce que** les axes des extrudeuses (2, 3) et des filières plates (16, 17) s'étendent horizontalement.

9. Système de calandre selon l'une quelconque des revendications 1 à 8, **caractérisé en ce que** les filières plates (16, 17) sont disposées de façon coudée par rapport aux axes des extrudeuses (2, 3).
